# EUROPEAN PATENT SPECIFICATION

(11) **EP 2 196 340 B1**
(45) Date of publication and mention of the grant of the patent: **28.09.2011**
(21) Application number: 09177718.5
(22) Date of filing: 02.12.2009
(51) Int. Cl.: B60H 1/00

(54) **Cooler arrangement in a vehicle**
Kühleranordnung in einem Fahrzeug
Aménagement d'échangeur de chaleur dans un véhicule

(30) Priority: 11.12.2008 SE 0802554
(43) Date of publication of application: 16.06.2010
(73) Proprietor: Scania CV AB, 151 87 Södertälje (SE)
(72) Inventor: Kardos, Zoltan, 151 35 Södertälje (SE); Söderberg, Erik, 111 29 Stockholm (SE)

(56) References cited:
- EP-A2- 0 488 553
- DE-A1- 3 605 699
- DE-A1- 10 233 323
- DE-A1- 10 321 295
- US-A- 5 060 742
- US-A1- 2004 139 757
- US-A1- 2007 051 491

## Description

### BACKGROUND TO THE INVENTION, AND STATE OF THE ART

The present invention relates to a cooler arrangement in a vehicle according to the preamble of claim 1.

Cabs in heavy vehicles are equipped in certain cases with refrigerators, inter alia for storage for food and beverages. However, many heavy vehicles are not provided with refrigerators because they are relatively expensive. The compressor cooling system represents the largest cost in a conventional refrigerator. The compressor cooling system takes the form of a line circuit with a refrigerant which is compressed by a compressor and circulated between a condenser, an expansion valve and an evaporator.

Heavy vehicles usually comprise an AC installation by which the air in the vehicle's cab can be cooled in warm weather. A conventional AC installation is substantially configured as a compressor cooling system. During operation of the AC installation, a compressor compresses a refrigerant before it is led to an air-cooled condenser which is usually situated at a front portion of the vehicle. The condenser is normally situated close to the radiator for cooling of coolant in the combustion engine's cooling system. The refrigerant, which converts to liquid form in the condenser, is led thereafter to a throttle valve in which it undergoes a pressure drop. The refrigerant is led thereafter to an evaporator in the vehicle's cab. The air in the driving cab is cooled by the refrigerant when it is vaporised in the evaporator. The refrigerant is finally led back to the compressor for renewed compression.

The refrigerants used in AC installations, e.g. carbon dioxide, need a very high working pressure. Partly for strength reasons and to reduce the risk of leakage, it is therefore advantageous if the lines in AC installations can be made as short as possible. The high pressure of the refrigerant also requires the lines to be rigid. It is therefore not advantageous to arrange the lines in regions where they are subject to large flexural stresses. Heavy vehicles are often provided with a resiliently suspended cab so that the driver has good comfort when the vehicle is travelling on uneven running surfaces. In many cases the cab is also tiltable to improve accessibility for servicing and engine work. However, it is difficult to run lines in AC installations up from the vehicle's chassis to a movable cab in such a way that the lines are not subject to flexural stresses when the cab undergoes relative movements with respect to the vehicle's chassis.

EP 0 488 553 depicts a cooling system for cooling a cab in a vehicle. The cooling system comprises a compressor cooling system which is arranged in an engine space in the vehicle and a heat transfer system in which a coolant is circulated by a pump between the engine space and the vehicle's cab. The coolant in the heat transfer system is cooled in an evaporator of the compressor cooling system. The cold coolant is thereafter led to a heat exchanger in the cab. A fan forces an air flow through the heat exchanger to render the cooling of the air in the cab more effective. US 2004/139757 discloses a cooling system according to the preamble of appending claim 1.

### SUMMARY OF THE INVENTION

The object of the present invention is to propose a cooler arrangement in a vehicle whereby a refrigerator in a cab can be provided easily and inexpensively.

This object is achieved with the arrangement of the kind mentioned in the introduction which is characterised by the features indicated in the characterising part of claim 1. The vehicle thus comprises according to the preamble of claim 1 a cooler arrangement with a compressor cooling system and a heat transfer system with a circulating coolant for cooling a first medium in a first space in the vehicle. The vehicle thus comprises an already present compressor cooling system and an already present heat transfer system for a cooling purpose in the vehicle. The invention uses the already present compressor cooling system and the already present heat transfer system to generate cold in a refrigerator in the vehicle's cab. To achieve this, the line circuits of the heat transfer system need to be modified, which in most cases can be done by fairly simple measures. The refrigerator may be of inherently relatively simple construction and may take the form of an openable box of any desired shape with walls made of material with good thermally insulating characteristics. The heat exchanger may also be of simple configuration. It may take the form of an elongate curved pipe loop which leads the coolant within the refrigerator. The pipe loop may be provided with cooling flanges for good heat transfer between the air in the refrigerator and the coolant in the pipe loop. Such a refrigerator using an already present compressor cooling system in a vehicle to generate cold can be provided easily and inexpensively.

According a preferred embodiment of the invention, the first heat exchanger is adapted to cooling air in the vehicle's cab. Most heavy vehicles are provided with an AC installation for cooling the air in the vehicle's cab. Such an AC installation usually comprises a compressor cooling system. Such an existing compressor cooling system can with advantage be used to generate cold in the refrigerator. As the refrigerator and the heat exchanger for cooling the air are both situated in the cab, relatively modest modifications of the heat transfer system will in this case make it possible for the heat transfer system to also lead cold coolant to the refrigerator.

According to another preferred embodiment of the invention, the heat transfer system comprises a valve device adapted to leading the flow of the cold coolant from the evaporator to the first heat exchanger in the first space and/or to the second heat exchanger in the refrigerator. Such a valve device makes it possible for the cab and the refrigerator to be cooled at different times. The valve device may be controlled by a control unit which receives information from a manually controlled operating device. The operating device is with advantage arranged in the cab at a location where it is readily accessible to a driver in the vehicle. The driver can thus easily reach the operating device in order to indicate whether the cab and/or refrigerator is/are to be cooled. The control unit may also be adapted to controlling the activation of the compressor in the compressor cooling system and a pump which circulates the coolant in the heat transfer system. The control unit may start the compressor and hence the compressor cooling system when the control unit receives information to the effect that the cab or the refrigerator is to be cooled. The control unit may substantially simultaneously start the pump so that it circulates the coolant in the heat transfer system.

According to another preferred embodiment of the invention, the cooler arrangement comprises a second heat transfer system with a circulating coolant adapted to cooling the refrigerant in the condenser of the compressor cooling system. The second heat transfer system effects the transfer of heat from the condenser of the compressor cooling system to the region in the vehicle where heat is to be delivered. The compressor cooling system need in this case to effect neither the transfer of cold to the cab nor the transfer of heat to said region in the vehicle and may thus have the sole task of effecting the actual generation of cold. The components of the compressor cooling system, e.g. the evaporator and the condenser, may therefore be situated very close together. The compressor cooling system may thus be made very compact and be provided with short lines between its components. The short lines result in less risk of leakage.

According to another preferred embodiment of the invention, the compressor cooling system comprises a condenser in which the refrigerant is cooled by air. The condenser may be situated in a region which has a natural flow of air passing through it during operation of the vehicle. The condenser is with advantage arranged at a peripheral surface of the vehicle. In such a region the condenser will come into contact with air at the temperature of the surroundings. The refrigerant can therefore be cooled in the condenser to a temperature close to the temperature of the surroundings. The compressor cooling system is arranged in an engine space in the vehicle. This makes it possible for the compressor cooling system to have a protected location while at the same time the servicing of the compressor cooling system is facilitated. The compressor cooling system may be fittable as a unit in the vehicle. The work of fitting the compressor cooling system in the vehicle will thus be facilitated, since all the lines between the components will already be in place.

According to the invention, the cab is arranged to be movable relative to a chassis of the vehicle. In heavy vehicles, the cab is usually resiliently suspended for greater driver comfort when the vehicle travels on uneven running surfaces. In many cases the cab is also tiltable to expose the components in the engine space during servicing and repair work. The first heat transfer system comprises a line circuit which at least in a transfer region between chassis and cab takes the form of lines made of flexible material. The coolant in the first heat transfer system is conveyed at a slight positive pressure in the line circuit, but the pressure of the coolant is so low that it is easy for the flexible lines carrying coolant to bend elastically when subjected to flexural stresses. The risk of damage to the lines from mutual movements between cab and chassis during operation of the vehicle or when the cab is tilted is thus eliminated.

### BRIEF DESCRIPTION OF THE DRAWING

Preferred embodiments of the invention are described below by way of examples with reference to the attached drawings, in which:
Fig. 1 depicts a cooler arrangement in a vehicle according to a first embodiment of the invention and
Fig. 2 depicts a cooler arrangement in a vehicle according to a second embodiment of the invention.

### DETAILED DESCRIPTION OF PREFERRED EMBODIMENTS OF THE INVENTION

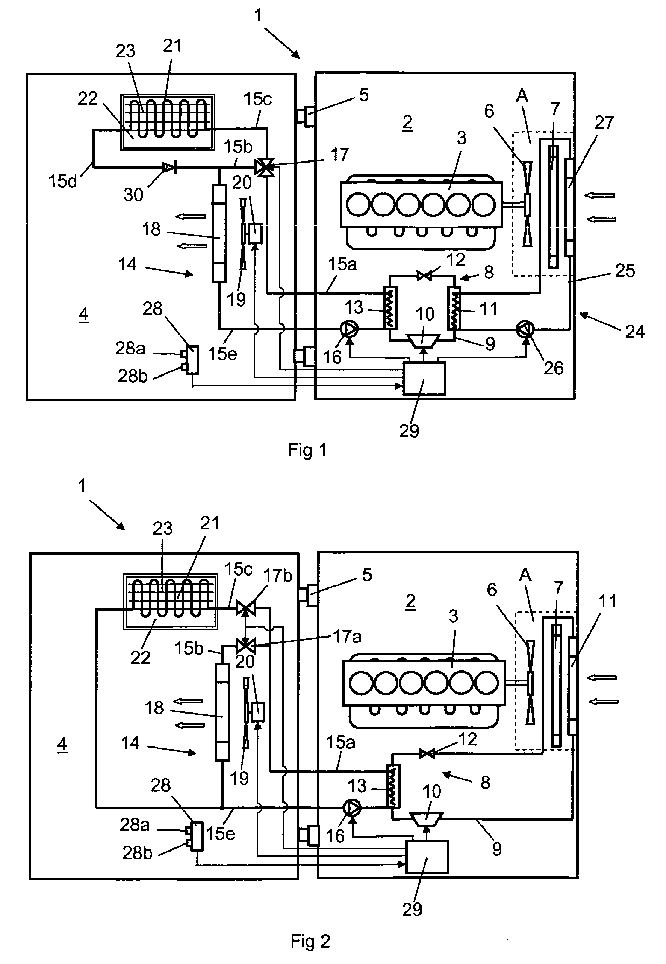

Fig. 1 depicts schematically a vehicle 1 which comprises an engine space 2 with a combustion engine 3. A cab 4 is resiliently suspended in the vehicle's chassis via schematically depicted suspension means 5. A cooling fan 6 is connected to the combustion engine 3 so that it can draw air through a radiator 7 for cooling of coolant in a conventional cooling system which is adapted to cooling the combustion engine 3. The radiator 7 is arranged in a region A at a front portion of the vehicle 1. A cooler arrangement in the vehicle 1 comprises a compressor cooling system 8 arranged in the engine space 2. The compressor cooling system 8 comprises in a conventional manner a line circuit 9 with a circulating refrigerant, a compressor 10, a condenser 11, an expansion valve 12 and an evaporator 13. The refrigerant may for example be carbon dioxide.

The cooler arrangement comprises a first heat transfer system 14 in the form of a line circuit 15 with a coolant which is circulated by a pump 16. The line circuit 15 comprises a line 15a which leads coolant from the evaporator 13 to a three-way valve 17. When the three-way valve 17 is placed in a first position, it leads the coolant from the line 15a via a line 15b to a heat exchanger 18 which is adapted to cooling the air in the cab 4. A cooling fan 19 driven by an electric motor 20 forces air through the heat exchanger 18 to render the cooling of the air in the cab 4 more effective. When the three-way valve 17 is placed in a second position, it leads the coolant from the line 15a via a line 15c to a heat exchanger 21 arranged in a refrigerator 22 in the cab 4. The refrigerator 22 may be a boxlike space of substantially any desired shape for storage of, for example, food and drink. The heat exchanger 21 comprises in this case a curved line portion provided with cooling flanges 23 for good heat transfer between the cold coolant in the heat exchanger 21 and the air in the refrigerator 22. The line circuit 15 comprises a line 15d which leads the coolant from the refrigerator 22 to the heat exchanger 18 in the cab 4. The line 15d comprises a check valve 30. After the coolant has circulated through the heat exchanger 18, it is led in a line 15e by the pump 16 back to the evaporator 13 in the engine space 2 for renewed cooling.

The cooler arrangement comprises a second heat transfer system 24 arranged in the engine space 2. The second heat transfer system 24 comprises a second line circuit 25 with a coolant intended to be circulated by a pump 26. The line circuit 25 comprises a radiator 27 arranged in the region A in the vehicle 1 at a position in front of the ordinary radiator 7. The coolant in the second heat transfer system 24 cools the refrigerant in the compressor cooling system 8 when it is led through the condenser 11. A manual operating device 28 by which the cooler arrangement can be activated is arranged in the cab 4. The operating device 28 comprises in this case two button means 28a, 28b which make it possible to choose to cool the air in the cab 4 and/or to cool the air in the refrigerator 22. A control unit 29 is adapted to receiving information from the operating device 28. On the basis on that information, the control unit 29 is adapted to controlling the compressor in the compressor cooling system 8, the pump 16 in the first heat transfer system, the pump 26 in the second heat transfer system 24, the cooling fan 19 and the three-way valve 17.

During operation of the vehicle 1, a driver presses the first button means 28a in when the air in the cab 4 needs to be cooled. A control signal is thereupon sent to the control unit 29, which starts the compressor 10 so that the refrigerant begins to circulate in the line circuit 9 of the compressor cooling system. The control unit 29 starts substantially simultaneously the pump 16 in the first heat transfer system 14 and the pump 26 in the second heat transfer system 24. The control unit 29 also activates the electric motor 20 so that the fan 19 starts up, and places the three-way valve 17 in the first position. The coolant which circulates in the first heat transfer system 14 is cooled in the evaporator 13. The cold coolant is led from the evaporator 13, which is situated in the engine space 2, via the line 15a to the three-way valve 17, which is situated in the cab 4. The three-way valve 17, which is thus placed in the first position, leads the coolant via the line 15b to the heat exchanger 18 in the driving cab 4. The air in the driving cab 4 is forced by the fan 19 through the heat exchanger 18 so that it undergoes good cooling. The coolant in the first heat transfer system 14 is thereafter led back to the evaporator 13 in the engine space 2 via the line 15e for renewed cooling.

The driver presses the second button means 28b in if the air in the refrigerator 22 is to be cooled. When the control unit 29 receives this information, it activates the compressor 10 in the compressor cooling system 8, the pump 16 in the first heat transfer system 14 and the pump 26 in the second heat transfer system 24 if they are not already activated. The control unit 29 then places the three-way valve 17 in the second position so that the cold coolant in the line 15a is led to the line 15c and the heat exchanger 21 in the refrigerator 22. When the cold coolant is led through the heat exchanger 21, it cools the air in the refrigerator 22 to a lower temperature than the temperature which prevails in the rest of the cab 4. The coolant leaving the refrigerator 22 is led via the line 15d to the heat exchanger 18 in the cab 4. The coolant will certainly be at a raised temperature after it has cooled the air in the refrigerator 22 but will still be at a lower temperature than the air in the cab 4. Here again, the result is cooling of the air in the cab 4 when the coolant is led through the heat exchanger 18. However, the cooling of the air in the cab 4 is in this case somewhat reduced. The coolant in the first heat transfer system is thereafter led back to the evaporator 13 in the engine space 2 via the line 15e for renewed cooling.

During operation of the cooler arrangement, the coolant in the second heat transfer system 24 cools the refrigerant in the condenser 11. The coolant thus warmed is led in the line circuit 25 to the radiator 27 situated in the region A at the front portion of the vehicle. Air at the temperature of the surroundings is forced by the fan 6 through the radiator 27 before being led through the ordinary radiator 7. The coolant in the second heat transfer system 24 thus undergoes effective cooling and can in favourable circumstances be cooled to a temperature close to the temperature of the surroundings. The coolant in the second heat transfer system 24 is thereafter led back to the condenser 11. The second heat transfer system 24 thus effects the transfer of heat from the compressor cooling system 8 to the front portion of the vehicle. The first heat transfer system 14 effects the transfer of cold from the compressor cooling system 8 to the driving cab 4. The compressor cooling system 8 thus does not need itself to effect the transfer of cold to the cab and heat to the region A but merely has the task of effecting the generation of cold. The compressor cooling system 8 can therefore be made very compact and be provided with optimally short lines in the line circuit 9. The compressor cooling system 8 may be situated at substantially any desired location in the vehicle 1.

As the driving cab 4 is arranged to be movable relative to the engine space 2, the lines 15a, 15e extending between the engine space 2 and the driving cab 4 are inevitably subject to flexural stresses during operation. The pump 16 in the first heat transfer system 14 provides the coolant with a pressure of up to about 2 bar to make circulation of the coolant possible in the first heat transfer system 14. However, this pressure is so low that the lines 15a, 15e which lead the coolant between the engine space 2 and the driving cab 4 can bend when filled with coolant, so the flexural stresses affecting the lines 15a, 15e are usually not a problem.

Fig. 2 depicts an alternative configuration of the cooler arrangement. In this case the heat exchanger 18 in the cab 4 and the heat exchanger 21 in the refrigerator 22 are connected in parallel in the first heat transfer system 14. A first valve means 17a is here arranged in a line 15b and a second valve means 17b in a line 15c. When the first button means 28a is pressed in during operation of the combustion engine 3, the control unit 29 places the first valve means 17a in an open position and the second valve means 17b in a closed position. The cold coolant from the evaporator 13 is thus led via the line 15b to the heat exchanger 18 in the driving cab 4. The air in the driving cab 4 is thus provided with good cooling. The coolant is thereafter led back to the evaporator 13 in the engine space 2 via a line 15e for renewed cooling. If instead the second button means 24a is pressed in during operation of the combustion engine 3, the control unit 29 places the first valve means 17a in a closed position and the second valve means 17b in an open position. The cold coolant from the evaporator 13 is in this case led via the line 15c to the heat exchanger 21 in the refrigerator 22. The air in the refrigerator 22 is thus provided with good cooling. The coolant is thereafter led back to the evaporator 13 in the engine space 2, inter alia via the line 15e for renewed cooling. If both the first button means 28a and the second button means 28b are pressed in during operation of the combustion engine 3, the control unit 29 places both the first valve means 17an and the second valve means 17b in an open position. Cold coolant is thus led both to the heat exchanger 18 in the cab 4 and to the heat exchanger 21 in the refrigerator 22, resulting in cooling of both the cab 4 and the refrigerator 22, although the cooling effect in the cab 4 and in the refrigerator will in this case be reduced, since a reduced amount of coolant will be led through the respective heat exchangers 18, 21.

The embodiment in Fig. 2 uses no second heat transfer system 24. The compressor cooling system 8 comprises instead an air-cooled condenser 11 arranged in the region A of the vehicle at a position in front of the ordinary radiator 7. The refrigerant in the compressor cooling system 8 is here cooled by air at the temperature of the surroundings. In this embodiment, however, lines for leading the refrigerant to and from the condenser 11 will be somewhat longer. The cab 4 and the refrigerator 22 may also be provided with temperature sensors which detect and inform the control unit 29 about the prevailing temperature in the cab 4 and the refrigerator 22 respectively. The control unit 29 may thereupon automatically halt the operation of the cooler arrangement temporarily during periods when the temperature in the cab 4 or in the refrigerator 22 becomes too low. The control unit 29 will restart the cooler arrangement automatically when the temperature in the cab 4 or the refrigerator 22 rises above the desired value. This temperature regulation may take place without the driver having to operate the button means 28a, 28b of the operating device 28.

The invention is in no way limited to the embodiments described in relation to the drawing but may be varied freely within the scopes of the claims.

## Claims

1. A cooler arrangement in a vehicle (1), comprising a compressor cooling system (8) arranged in an engine space (2) in the vehicle (1), which comprises a compressor (10), an evaporator (13) and a condenser (11), and a heat transfer system (14) which comprises a line circuit (15) adapted to leading cold coolant from the evaporator (13) to a first heat exchanger (18) which is adapted to cooling a first medium in a cab (4) in the vehicle (1) and to a second heat exchanger (21) which is adapted to cooling air in a refrigerator (22) in the cab (4), **characterised in that** the cab (4) is arranged to be movable relative to a chassis of the vehicle, and that the cab (4) is resiliently suspended in the vehicle (1) by means of suspension means (5), that the line circuit (15) of the heat transfer system (14) comprises lines (15a, 15e) made of flexible material in at least one transfer region between the engine space (2) and the cab (4), and that the coolant is conveyed at a slight positive pressure in the line circuit so that it is easy for the flexible parts of the lines carrying coolant in the transfer region between the engine space (2) and the cab (4) to bend elastically when subjected to flexural stresses during operation of the vehicle.

2. A cooler arrangement according to claim 1, **characterised in that** the first heat exchanger (18) is adapted to cooling of air in the vehicle's cab (4).

3. A cooler arrangement according to claim 1 or 2, **characterised in that** the heat transfer system (14) comprises a valve device (17, 17a, 17b) adapted to leading the flow of the cold coolant from the evaporator (13) to the first heat exchanger (18) in the first space (4) and/or to the second heat exchanger (21) in the refrigerator (22).

4. A cooler arrangement according to claim 3, **characterised in that** the valve device (17, 17a, 17b) is controlled by a control unit (29) which receives information from a manually controlled operating device (28).

5. A cooler arrangement according to any one of the foregoing claims, **characterised in that** the control unit (29) is also adapted to controlling the activation of the compressor in the compressor cooling system (8) and a pump which circulates the coolant in the heat transfer system (14).

6. A cooler arrangement according to any one of the foregoing claims, **characterised in that** the cooler arrangement comprises a second heat transfer system with a circulating coolant which is intended to cool the refrigerant in the condenser (11) of the compressor cooling system (8).

7. A cooler arrangement according to any one of claims 1 to 5 above, **characterised in that** the compressor cooling system (18) comprises a condenser (11) in which the refrigerant is cooled by air.

## Patentansprüche

1. Kühleranordnung in einem Fahrzeug (1), wobei die Kühleranordnung ein Kompressorkühlsystem (8) umfasst, das in einem Motorraum (2) in einem Fahrzeug (1) angeordnet ist und einen Kompressor (10), einen Verdampfer (13) und einen Kondensator (11) aufweist, und ein Wärmeübertragungssystem (14), das einen Leitungskreis (15) aufweist, der dazu geeignet ist, um kaltes Kältemittel von dem Verdampfer (13) zu einem ersten Wärmetauscher (18) zu leiten, welcher dazu geeignet ist, um ein erstes Medium in einem Fahrerhaus (4) in dem Fahrzeug (1) zu kühlen, und zu einem zweiten Wärmetauscher (21) zu leiten, welcher dazu geeignet ist, um Luft in einem Kühlschrank (20) in dem Fahrerhaus zu kühlen,
**dadurch gekennzeichnet, dass** das Fahrerhaus (4) relativ zum dem Chassis des Fahrzeugs bewegbar angeordnet ist, und dass das Fahrerhaus (4) in dem Fahrzeug (1) mittels Aufhängungsmitteln (5) federnd aufgehängt ist, und dass der Leitungskreis (15) des Wärmeübertragungssystems (14) aus flexiblem Material bestehende Leitungen (15a, 15e) in mindestens einem Übergangsbereich zwischen dem Motorraum (2) und dem Fahrerhaus (4) umfasst, und dass die Kühlflüssigkeit mit einem leichten Überdruck in dem Leitungskreis transportiert wird, so dass es einfach möglich ist, dass sich die flexiblen Teile der Leitung, die das Kühlmittel in dem Übergangsbereich zwischen dem Motorraum (2) und dem Fahrerhaus (4) transportieren, elastisch verbiegen, wenn sie während des Betreibens des Fahrzeugs einer Biegespannung ausgesetzt werden.

2. Kühleranordnung nach Anspruch 1,
**dadurch gekennzeichnet, dass** der erste Wärmetauscher (18) dazu geeignet ist, um die Luft in dem Fahrerhaus (4) des Fahrzeugs zu kühlen.

3. Kühleranordnung nach Anspruch 1 oder 2,
**dadurch gekennzeichnet, dass** das Wärmetauschersystem (14) eine Ventilvorrichtung (17, 17a, 17b) umfasst, die dazu geeignet ist, um den Strom des kalten Kühlmittels von dem Verdampfer (13) zu dem ersten Wärmetauscher (18) in dem ersten Raum (4) und/oder zu dem zweiten Wärmetauscher (21) in dem Kühlschrank (22) zu transportieren.

4. Kühleranordnung nach Anspruch 3,
**dadurch gekennzeichnet, dass** die Ventilvorrichtung (17, 17a, 17b) durch eine Steuereinheit (29) gesteuert wird, die Informationen aus einem manuell gesteuerten Bediengerät (28) erhält.

5. Kühleranordnung nach einem der vorhergehenden Ansprüche,
**dadurch gekennzeichnet, dass** die Steuereinheit (29) auch dazu geeignet ist, um die Aktivierung des Kompressors in dem Kompressorkühlsystem (8) und eine Pumpe, die die Kühlflüssigkeit in dem Wärmeübertragungssystem (14) umwälzt, zu regeln.

6. Kühleranordnung nach einem der vorhergehenden Ansprüche,
**dadurch gekennzeichnet, dass** die Kühleranordnung ein zweites Wärmeübertragungssystem mit einem zirkulierenden Kühlmittel umfasst, das dazu bestimmt ist, das Kältemittel in dem Kondensator (11) des Kompressorkühlsystems (8) zu kühlen.

7. Kühleranordnung nach einem der oberen Ansprüche 1 bis 5,
**dadurch gekennzeichnet, dass** das Kompressorkühlsystem (18) einen Kondensator (11) umfasst, in dem das Kältemittel durch Luft gekühlt wird.

## Revendications

1. Agencement d'appareil de refroidissement dans un véhicule (1), comprenant un système de refroidissement à compresseur (8) disposé dans un espace moteur (2) du véhicule (1) et qui comprend un compresseur (10), un évaporateur (13) et un condenseur (11), et un système de transmission de chaleur (14) qui comprend un circuit de conduites (15) conçu pour conduire un fluide frigorigène froid de l'évaporateur (13) à un premier échangeur de chaleur (18) qui est conçu pour refroidir un premier milieu dans une cabine (4) du véhicule (1) et à un second échangeur de chaleur (21) qui est conçu pour refroidir de l'air dans un réfrigérateur (22) situé dans la cabine (4), **caractérisé en ce que** la cabine (4) est agencée pour être mobile par rapport à un châssis du véhicule, et que la cabine est suspendue élastiquement dans le véhicule (1) à l'aide de moyens de suspension (5), que le circuit de conduites (15) du système de transmission de chaleur (14) comprend des conduites (15a, 15e) faites de matière flexible dans au moins une région de transfert entre l'espace moteur (2) et la cabine (4) et que le fluide frigorigène est transporté à une pression légèrement positive dans le circuit de conduites, de sorte qu'il est facile pour les parties flexibles des conduites qui transportent du fluide frigorigène dans la région de transfert entre l'espace moteur (2) et la cabine (4) de fléchir élastiquement lorsqu'elles sont soumises à des contraintes de flexion pendant l'utilisation du véhicule.

2. Agencement d'appareil de refroidissement selon la revendication 1, **caractérisé en ce que** le premier échangeur de chaleur (18) est conçu pour refroidir de l'air dans la cabine (4) du véhicule.

3. Agencement d'appareil de refroidissement selon la revendication 1 ou 2, **caractérisé en ce que** le système de transmission de chaleur (14) comprend un dispositif valve (17, 17a, 17b) conçu pour conduire le flux de fluide frigorigène froid de l'évaporateur (13) au premier échangeur de chaleur (18) situé dans le premier espace (4) et/ou au second échangeur de chaleur (21) situé dans le réfrigérateur (22).

4. Agencement d'appareil de refroidissement selon la revendication 3, **caractérisé en ce que** le dispositif valve (17, 17a, 17b) est commandé par une unité de commande (29) qui reçoit de l'information d'un dispositif d'actionnement commandé manuellement (28).

5. Agencement d'appareil de refroidissement selon une quelconque des revendications précédentes, **caractérisé en ce que** l'unité de commande (29) est aussi conçue pour commander l'activation du compresseur du système de refroidissement à compresseur (8) et d'une pompe qui fait circuler le fluide frigorigène dans le système de transmission de chaleur (14).

6. Agencement d'appareil de refroidissement selon une quelconque des revendications précédentes, **caractérisé en ce que** l'agencement d'appareil de refroidissement comprend un second système de transmission de chaleur comportant un fluide frigorigène circulant destiné à refroidir le fluide frigorigène dans le condenseur (11) du système de refroidissement à compresseur (8).

7. Agencement d'appareil de refroidissement selon une quelconque des revendications 1 à 5 précédentes, **caractérisé en ce que** le système de refroidissement à compresseur (18) comprend un condenseur (11) dans lequel le fluide frigorigène est refroidi par air.
